# EUROPEAN PATENT APPLICATION

(11) **EP 4 814 791 A1**
(43) Date of publication of application: **30.09.2026**
(21) Application number: 26167111.9
(22) Date of filing: 24.03.2026
(51) Int. Cl.: G06N 3/045, G06N 3/048, G06N 3/063

(54) **SYSTEMS AND METHODS FOR ATTENTION MASKING**

(30) Priority: 28.03.2025 US 202563780063 P; 25.06.2025 US 202519249445
(71) Applicant: Tesla, Inc., Austin, TX 78725 (US)
(72) Inventor: RAWAT, Ritvik, Austin, Texas, 78725 (US); SAMPATHKUMAR, Srihari, Austin, Texas, 78725 (US)
(74) Representative: Liesegang, Eva

(57) **Abstract**

Embodiments described herein provide for computing masked scores in transformer models without materializing a full mask. A matrix is partitioned into submatrices based on available processing elements. At least one element is initialized with row and column index values and evaluates a masking condition using a comparison operation, which is fused into the softmax computation. This approach supports causal and batched masks with minimal overhead and is well-suited for applications such as autonomous navigation, where computed weights guide downstream decision-making.

## Description

### CROSS-REFERENCE TO RELATED APPLICATIONS

This application claims priority to U.S. Provisional Patent Application No. 63/780,063, filed Match 28, 2025, which is incorporated herein by reference in its entirety for all purposes.

### TECHNICAL FIELD

The present application relates generally to machine learning and neural network computation, and more specifically to systems and methods for efficiently applying masks in transformer architectures.

### BACKGROUND

Autonomous navigation technology used for autonomous vehicles and robots (sometimes referred to as "egos") has become ubiquitous due to rapid advancements in computer technology. These advances allow for safer and more reliable autonomous navigation of egos.

Autonomous navigation systems are increasingly adopting transformer models due to their ability to process complex, multi-modal data and capture long-range dependencies within sequential inputs. Unlike traditional convolutional or recurrent neural networks, transformers can simultaneously attend to spatial and temporal features across high-dimensional inputs. This capability enables more accurate perception, trajectory prediction, and decision-making in dynamic environments. Moreover, the scalability and architecture of transformer models make them well-suited for integrating contextual information that can be incorporated into autonomous navigation decisions.

A component of transformer models is the attention mechanism, which allows each element of an input sequence to selectively focus on other elements. To ensure that this attention mechanism operates correctly and efficiently, especially in tasks involving sequence prediction or structured input, masking techniques are employed. Masking, in the context of transformers, refers to the selective blocking of certain elements/tokens in the computation, thereby controlling or manipulating which tokens can be attended to.

Increases in data volume and feature sophistication naturally raise problems of resource demands, requiring solutions for improving computational efficiencies in both the hardware and software components of the egos, which includes the transformer models used by the egos. This necessitates sophisticated mechanisms for compiling and deploying the neural network architectures on the egos.

### SUMMARY

Common use cases of masking paradigms may include enforcing causal dependencies-where a given model should only attend to earlier tokens-and ignoring other (e.g., padding) tokens that are added to equalize sequence lengths in batched processing. These masks ensure that the attention mechanism (or other mechanisms utilized) yields valid results while optimizing computation and improving efficiency.

Discussed herein are methods and systems for generating and applying masks (such as attention masks) in neural network architectures without materializing a full (l, l) mask matrix. The disclosed methods and systems enable efficient computation of a broad range of masking patterns through runtime index-based operations, thereby eliminating the memory and computational overhead associated with conventional mask materialization. The methods and systems discussed herein support standard masking schemes, including causal masks used during prefill and decoding phases, as well as custom or domain-specific masks tailored for specialized applications such as autonomous navigation and self-driving technology.

The methods and systems discussed herein use a lightweight runtime comparison between row and column indices during the softmax operation to determine whether a score (e.g., an attention score) should be masked. The masking logic may be executed per processing element (e.g., a hardware thread in a processor) allowing the operation (e.g., an attention operation) to remain fully parallelizable while minimizing memory overhead.

In high-performance computing environments, such as those leveraging Single Instruction Multiple Thread (SIMT), Single Instruction Multiple Data (SIMD), or multi-core processors, masking operations are often fused with the softmax computation performed over the query-key (QK) matrix. This fusion typically involves modifying the input scores to the softmax function such that masked values are either set to negative infinity (e.g., "-inf" causing their exponential value to become zero) or their exponentials are computed and subsequently zeroed out. This approach prevents masked positions from contributing to the distribution (e.g., attention distribution). That is, using this paradigm, softmax does not process the masked tokens (that are zeroed out).

In conventional transformer architectures, masking is typically implemented by constructing a full predication mask with dimensions matching the matrix. This mask explicitly encodes which token interactions are permitted and which are disallowed. Some use a brute force paradigm in which the entire mask is materialized, and then element-wise operations are performed where every input is either kept or discarded based on the value of the corresponding element in the mask. However, this masking paradigm increases (e.g., sometimes effectively doubles) the data movement and memory bandwidth requirements compared to an implementation that operates solely on the attention scores. Accordingly, this brute-force technique is particularly inefficient on hardware with limited memory or high sensitivity to data transfer costs. Therefore, this technique is highly undesirable, especially for autonomous navigation and decision-making, which requires real-time or near-real-time decision-making ability.

Accordingly, conventional masking paradigms incur two costs to the overall system. The first cost may be a memory bandwidth cost associated with materializing the full (1, l) mask that requires loading and storing a large matrix in memory. This significantly increases memory bandwidth usage, especially when the matrix itself also has to be loaded for computation. The second cost may be a performance penalty or compute cost. This cost may be associated with performing element-wise operations between the mask and the attention scores that may introduce a computational overhead, especially on highly parallel architectures like SIMD, SIMT, or multi-core processors. In conventional paradigms, when fused with the softmax operation, each masked value either has to be set to negative infinity before computing exponentials or exponentials computed and later zeroed out-both of which add unnecessary computational steps that reduce overall throughput.

For the aforementioned reasons, there is a need for more efficient masking techniques that reduce computational overhead, minimize memory usage, and are suitable for deployment across a wide variety of hardware platforms, including embedded systems and quantized neural network implementations.

The methods and systems disclosed herein are not limited to attention masking in transformer architectures but may more generally apply to any computational context in which selective, condition-based filtering of data is required across matrix-like structures or high-dimensional tensors (e.g., matrix multiplication between vectors). Because the methods and systems discussed herein enable masking behavior through index-based comparisons executed at the processing element level-without materializing large control structures-it may be applied to any encoding tasks (e.g., dynamic gating in neural network layers, selective pooling or aggregation operations, sparsity enforcement in structured matrices, or efficient filtering of graph edges in graph neural networks). In one example, the methods and systems discussed herein may be used to implement dynamic feature selection within a convolutional backbone by masking out irrelevant spatial regions based on geometric constraints. In another example, the methods and systems discussed herein may be used to enforce access control policies or visibility rules in multi-agent reinforcement learning environments by masking out agent interactions dynamically. Thus, the methods and systems discussed herein offer a general-purpose masking framework for efficient, condition-driven computation across a broad range of machine learning and signal processing domains.

In some embodiments, the techniques described herein relate to a method for autonomous navigation of an ego using a transformer model, the method including: partitioning, by one or more processors, a matrix associated with the transformer model into a plurality of submatrices based on a number of processing elements; assigning, by the one or more processors, the plurality of submatrices to a plurality of processing elements configured to generate a score for the plurality of submatrices; initializing, by the one or more processors, a column index value and a row index value for the plurality of submatrices corresponding to a respective position in the matrix; generating, by the one or more processors, a score in accordance with a softmax computation and a masking condition based on the row index value and the column index value; and transmitting, by the one or more processors, to an autonomous navigation application, at least one weight based on the score, whereby the autonomous navigation application generate at least one executable navigational instruction to be executed by a processor of the ego.

In some embodiments, the techniques described herein relate to a method, wherein the masking condition includes a comparison between the row index value and the column index value to determine whether to assign a predefined masking value to the score.

In some embodiments, the techniques described herein relate to a method, wherein the predefined masking value includes a negative infinity value or a value that renders a corresponding score negligible in a softmax computation.

In some embodiments, the techniques described herein relate to a method, wherein at least one processing element evaluates the masking condition without accessing a precomputed mask matrix.

In some embodiments, the techniques described herein relate to a method, wherein the softmax computation is fused with the masking.

In some embodiments, the techniques described herein relate to a method, wherein transmitting the at least one weight includes sending the at least one weight to an autonomous navigation application configured to generate a predicted trajectory based on camera or sensor input data.

In some embodiments, the techniques described herein relate to a method, wherein at least one processing element processes a column of at least one submatrix independently and in parallel with other processing elements.

In some embodiments, the techniques described herein relate to a computer system for autonomous navigation of an ego using a transformer model, the computer system including a computer-readable medium having a set of non-transitory instructions that when executed by at least one processor, cause the at least one processor to: partition a matrix associated with the transformer model into a plurality of submatrices based on a number of processing elements; assign the plurality of submatrices to a plurality of processing elements configured to generate a score for the plurality of submatrices; initialize a column index value and a row index value for the plurality of submatrices corresponding to a respective position in the matrix; generate a score in accordance with a softmax computation and a masking condition based on the row index value and the column index value; and transmit to an autonomous navigation application, at least one weight based on the score, whereby the autonomous navigation application generate at least one executable navigational instruction to be executed by a processor of the ego.

In some embodiments, the techniques described herein relate to a computer system, wherein the masking condition includes a comparison between the row index value and the column index value to determine whether to assign a predefined masking value to the score.

In some embodiments, the techniques described herein relate to a computer system, wherein the predefined masking value includes a negative infinity value or a value that renders a corresponding score negligible in a softmax computation.

In some embodiments, the techniques described herein relate to a computer system, wherein at least one processing element evaluates the masking condition without accessing a precomputed mask matrix.

In some embodiments, the techniques described herein relate to a computer system, wherein the softmax computation is fused with the masking.

In some embodiments, the techniques described herein relate to a computer system, wherein transmitting the at least one weight includes sending the at least one weight to an autonomous navigation application configured to generate a predicted trajectory based on camera or sensor input data.

In some embodiments, the techniques described herein relate to a computer system, wherein at least one processing element processes a column of at least one submatrix independently and in parallel with other processing elements.

In some embodiments, the techniques described herein relate to a computer system for autonomous navigation of an ego using a transformer model, the computer system including at least one processor configured to: partition a matrix associated with the transformer model into a plurality of submatrices based on a number of processing elements; assign the plurality of submatrices to a plurality of processing elements configured to generate a score for the plurality of submatrices; initialize a column index value and a row index value for the plurality of submatrices corresponding to a respective position in the matrix; generate a score in accordance with a softmax computation and a masking condition based on the row index value and the column index value; and transmit to an autonomous navigation application, at least one weight based on the score, whereby the autonomous navigation application generate at least one executable navigational instruction to be executed by a processor of the ego.

In some embodiments, the techniques described herein relate to a computer system, wherein the masking condition includes a comparison between the row index value and the column index value to determine whether to assign a predefined masking value to the score.

In some embodiments, the techniques described herein relate to a computer system, wherein at least one processing element evaluates the masking condition without accessing a precomputed mask matrix.

In some embodiments, the techniques described herein relate to a computer system, wherein the softmax computation is fused with the masking.

In some embodiments, the techniques described herein relate to a computer system, wherein transmitting the at least one weight includes sending the at least one weight to an autonomous navigation application configured to generate a predicted trajectory based on camera or sensor input data.

In some embodiments, the techniques described herein relate to a computer system, wherein at least one processing element processes a column of at least one submatrix independently and in parallel with other processing elements.

### BRIEF DESCRIPTION OF THE DRAWINGS

Non-limiting embodiments of the present disclosure are described by way of example concerning the accompanying figures, which are schematic and are not intended to be drawn to scale. Unless indicated as representing the background art, the figures represent aspects of the disclosure.
**FIG. 1A** illustrates components of a customized masking system for egos, according to embodiments.
**FIG. 1B** illustrates various sensors associated with vehicle (or other type of ego), according to embodiments.
**FIG. 1C** illustrates the components of an ego, according to embodiments.
**FIG. 2** illustrates a flow diagram executed in a customized mask generation system, according to embodiments.
**FIG. 3** illustrates a visualization of a masking paradigm, according to embodiments.
**FIGS. 4A-4C** illustrate visualizations of masking paradigms, according to embodiments.
**FIG. 5** illustrates a visualization of a masking function based on integer overflow behavior, according to embodiments.
**FIG. 6** illustrates a path planning paradigm using the methods and systems discussed herein, according to embodiments.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. Other embodiments may be used and/or other changes may be made without departing from the spirit or scope of the present disclosure. The illustrative embodiments described in the detailed description are not meant to be limiting to the subject matter presented.

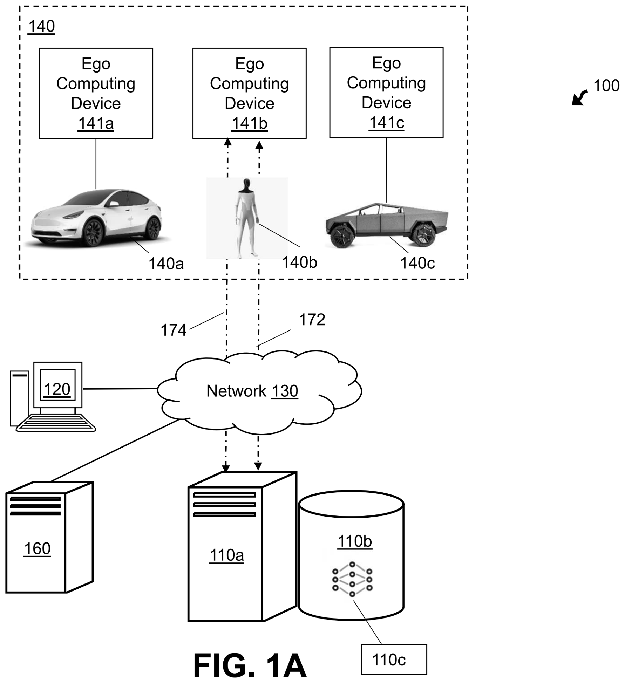

**FIG. 1A** is a non-limiting example of components of a system in which the methods and systems discussed herein can be implemented. **FIG. 1A** illustrates components of an AI-enabled visual data analysis system **100.** The system **100** may include an analytics server **110a,** a system database **110b,** an administrator computing device **120,** egos **140a-b** (collectively ego(s) **140),** ego computing devices **141a-c** (collectively ego computing devices **141),** and a server **160.** The system **100** is not confined to the components described herein and may include additional or other components not shown for brevity, which are to be considered within the scope of the embodiments described herein.

The above-mentioned components may be connected through a network **130.** Examples of the network **130** may include, but are not limited to, private or public LAN, WLAN, MAN, WAN, and the Internet. The network **130** may include wired and/or wireless communications according to one or more standards and/or via one or more transport mediums.

The communication over the network **130** may be performed in accordance with various communication protocols such as Transmission Control Protocol and Internet Protocol (TCP/IP), User Datagram Protocol (UDP), and IEEE communication protocols. In one example, the network **130** may include wireless communications according to Bluetooth specification sets or another standard or proprietary wireless communication protocol. In another example, the network **130** may also include communications over a cellular network, including, for example, a GSM (Global System for Mobile Communications), CDMA (Code Division Multiple Access), or an EDGE (Enhanced Data for Global Evolution) network.

The system **100** illustrates an example of a system architecture and components that can be used to train and execute one or more AI models, such the AI model(s) **110c.** Specifically, as depicted in **FIG. 1A** and described herein, the analytics server **110a** can execute the AI model(s) **110c** using data retrieved from the egos **140** (e.g., by using data streams **172** and **176)** to make navigational decisions. When the AI model(s) **110c** have been trained, each of the egos **140** may have access to and execute the trained AI model(s) **110c.** For instance, the vehicle **140a** having the ego computing device **141a** may transmit its camera feed to the trained AI model(s) **110c** and may determine the occupancy status of its surroundings (e.g., data stream **174).** Moreover, the data ingested and/or predicted by the AI model(s) **110c** with respect to the egos **140** (at inference time) may also be used to improve the AI model(s) **110c.** Therefore, the system **100** depicts a continuous loop that can periodically improve the accuracy of the AI model(s) **110c.** Moreover, the system **100** depicts a loop in which data received the egos **140** can be used to at training phase in addition to the inference phase.

The analytics server **110a** may be configured to collect, process, and analyze navigation data (e.g., images captured while navigating) and various sensor data collected from the egos **140.** The collected data may then be processed and prepared into a training dataset. The training dataset may then be used to train one or more AI models, such as the AI model **110c.** The analytics server **110a** may also be configured to collect visual data from the egos **140.** Using the AI model **110c** (trained using the methods and systems discussed herein), the analytics server **110a** may generate navigational decisions for the egos **140.**

In **FIG. 1A****,** the AI model **110c** is illustrated as a component of the system database **110b,** but the AI model **110c** may be stored in a different or a separate component, such as cloud storage or any other data repository accessible to the analytics server **110a.**

The analytics server **110a** may also be configured to display an electronic platform illustrating various training attributes for training the AI model **110c.** The electronic platform may be displayed on the administrator computing device **120,** such that an analyst can monitor the training of the AI model **110c.** An example of the electronic platform generated and hosted by the analytics server **110a** may be a web-based application or a website configured to display the training dataset collected from the egos **140** and/or training status/metrics of the AI model **110c.**

The analytics server **110a** may be any computing device comprising a processor and non-transitory machine-readable storage capable of executing the various tasks and processes described herein. Non-limiting examples of such computing devices may include workstation computers, laptop computers, server computers, and the like. While the system **100** includes a single analytics server **110a,** the system **100** may include any number of computing devices operating in a distributed computing environment, such as a cloud environment.

The egos **140** may represent various electronic data sources that transmit data associated with their previous or current navigation sessions to the analytics server **110a.** The egos **140** may be any apparatus configured for navigation, such as a vehicle **140a** and/or a truck **140c.** The egos **140** are not limited to being vehicles and may include robotic devices as well. For instance, the egos **140** may include a robot **140b,** which may represent a general purpose, bipedal, autonomous humanoid robot capable of navigating various terrains. The robot **140b** may be equipped with software that enables balance, navigation, perception, or interaction with the physical world. The robot **140b** may also include various cameras configured to transmit visual data to the analytics server **110a.**

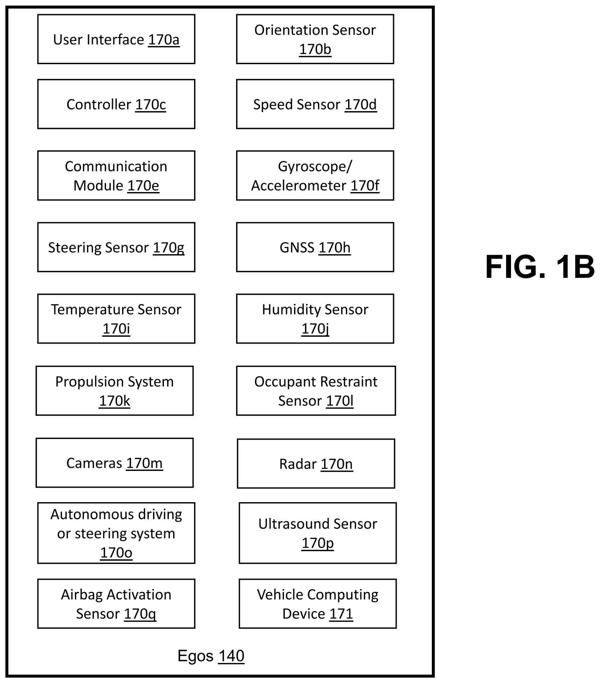

Even though referred to herein as an "ego," the egos **140** may or may not be autonomous devices configured for automatic navigation. For instance, in some embodiments, the ego **140** may be controlled by a human operator or by a remote processor. The ego **140** may include various sensors, such as the sensors depicted in **FIG. 1B****.** The sensors may be configured to collect data as the egos **140** navigate various terrains (e.g., roads). The analytics server **110a** may collect data provided by the egos **140.** For instance, the analytics server **110a** may obtain navigation session and/or road/terrain data (e.g., images of the egos **140** navigating roads) from various sensors, such that the collected data is eventually used by the AI model **110c** for training purposes.

As used herein, a navigation session corresponds to a trip where egos **140** travel a route, regardless of whether the trip was autonomous or controlled by a human. In some embodiments, the navigation session may be for data collection and model training purposes. However, in some other embodiments, the egos **140** may refer to a vehicle purchased, rented, leased, etc. by a consumer and the purpose of the trip may be categorized as everyday use. The navigation session may start when the egos **140** move from a non-moving position beyond a threshold distance (e.g., 0.1 miles, 100 feet) or exceed a threshold speed (e.g., over 0 mph, over 1 mph, over 5 mph). The navigation session may end when the egos **140** are returned to a non-moving position and/or are turned off (e.g., when a driver exits a vehicle).

The egos **140** may represent a collection of egos monitored by the analytics server **110a** to train the AI model(s) **110c.** For instance, a driver for the vehicle **140a** may authorize the analytics server **110a** to monitor data associated with their respective vehicle. As a result, the analytics server **110a** may utilize various methods discussed herein to collect sensor/camera data and generate a training dataset to train the AI model(s) **110c** accordingly. The analytics server **110a** may then apply the trained AI model(s) **110c** to analyze data associated with the egos **140** and to predict a navigational decision. Moreover, additional/ongoing data associated with the egos **140** can also be processed and added to the training dataset, such that the analytics server **110a** re-calibrates the AI model(s) **110c** accordingly. Therefore, the system **100** depicts a loop in which navigation data received from the egos **140** can be used to train the AI model(s) **110c.** The egos **140** may include processors that execute the trained AI model(s) **110c** for navigational purposes. While navigating, the egos **140** can collect additional data regarding their navigation sessions, and the additional data can be used to calibrate the AI model(s) **110c.** That is, the egos **140** represent egos that can be used to train, execute/use, and re-calibrate the AI model(s) **110c.** In a non-limiting example, the egos **140** represent vehicles purchased by customers that can use the AI model(s) **110c** to autonomously navigate while simultaneously improving the AI model(s) **110c.**

The egos **140** may be equipped with various technology allowing the egos to collect data from their surroundings and (possibly) navigate autonomously. For instance, the egos **140** may be equipped with inference chips to run self-driving software.

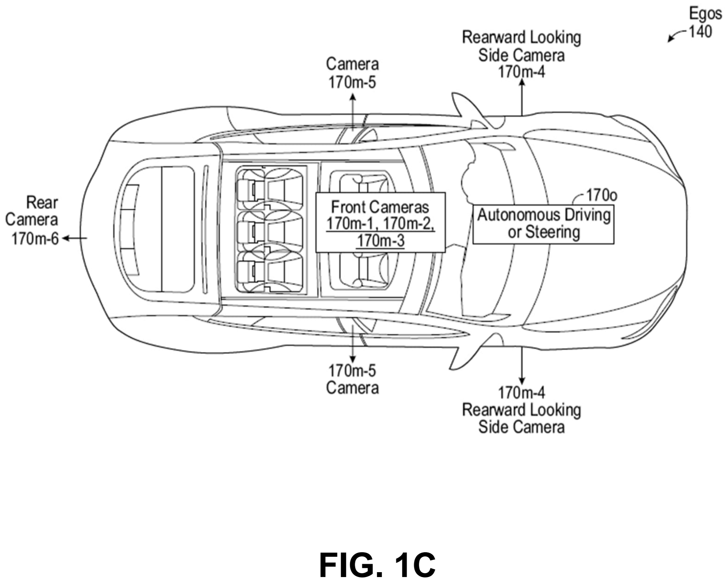

Various sensors for each ego **140** may monitor and transmit the collected data associated with different navigation sessions to the analytics server **110a.** **FIGS. 1B-C** illustrate block diagrams of sensors integrated within the egos **140,** according to embodiments. The number and position of each sensor discussed with respect to **FIGS. 1B-C** may depend on the type of ego discussed in **FIG. 1A****.** For instance, the robot **140b** may include different sensors than the vehicle **140a** or the truck **140c.** For instance, the robot **140b** may not include the airbag activation sensor **170q.** Moreover, the sensors of the vehicle **140a** and the truck **140c** may be positioned differently than illustrated in **FIG. 1C****.**

As discussed herein, various sensors integrated within each ego **140** may be configured to measure various data associated with each navigation session. The analytics server **110a** may periodically collect data monitored and collected by these sensors, wherein the data is processed in accordance with the methods described herein and used to train the AI model **110c** and/or execute the AI model **110c** to generate the occupancy map.

The egos **140** may include a user interface **170a.** The user interface **170a** may refer to a user interface of an ego computing device (e.g., the ego computing devices **141** in **FIG. 1A****).** The user interface **170a** may be implemented as a display screen integrated with or coupled to the interior of a vehicle, a heads-up display, a touchscreen, or the like. The user interface **170a** may include an input device, such as a touchscreen, knobs, buttons, a keyboard, a mouse, a gesture sensor, a steering wheel, or the like. In various embodiments, the user interface **170a** may be adapted to provide user input (e.g., as a type of signal and/or sensor information) to other devices or sensors of the egos **140** (e.g., sensors illustrated in **FIG. 1B****),** such as a controller **170c.**

The user interface **170a** may also be implemented with one or more logic devices that may be adapted to execute instructions, such as software instructions, implementing any of the various processes and/or methods described herein. For example, the user interface **170a** may be adapted to form communication links, transmit and/or receive communications (e.g., sensor signals, control signals, sensor information, user input, and/or other information), or perform various other processes and/or methods. In another example, the driver may use the user interface **170a** to control the temperature of the egos **140** or activate its features (e.g., autonomous driving or steering system **170o**). Therefore, the user interface **170a** may monitor and collect driving session data in conjunction with other sensors described herein. The user interface **170a** may also be configured to display various data generated/predicted by the analytics server **110a** and/or the AI model **110c.**

An orientation sensor **170b** may be implemented as one or more of a compass, float, accelerometer, and/or other digital or analog device capable of measuring the orientation of the egos **140** (e.g., magnitude and direction of roll, pitch, and/or yaw, relative to one or more reference orientations such as gravity and/or magnetic north). The orientation sensor **170b** may be adapted to provide heading measurements for the egos **140.** In other embodiments, the orientation sensor **170b** may be adapted to provide roll, pitch, and/or yaw rates for the egos **140** using a time series of orientation measurements. The orientation sensor **170b** may be positioned and/or adapted to make orientation measurements in relation to a particular coordinate frame of the egos **140.**

A controller **170c** may be implemented as any appropriate logic device (e.g., processing device, microcontroller, processor, application-specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of the egos **140.** Such software instructions may also implement methods for processing sensor signals, determining sensor information, providing user feedback (e.g., through user interface **170a),** querying devices for operational parameters, selecting operational parameters for devices, or performing any of the various operations described herein.

A communication module **170e** may be implemented as any wired and/or wireless interface configured to communicate sensor data, configuration data, parameters, and/or other data and/or signals to any feature shown in **FIG. 1A** (e.g., analytics server **110a).** As described herein, in some embodiments, communication module **170e** may be implemented in a distributed manner such that portions of communication module **170e** are implemented within one or more elements and sensors shown in **FIG. 1B****.** In some embodiments, the communication module **170e** may delay communicating sensor data. For instance, when the egos **140** do not have network connectivity, the communication module **170e** may store sensor data within temporary data storage and transmit the sensor data when the egos **140** are identified as having proper network connectivity.

A speed sensor **170d** may be implemented as an electronic pitot tube, metered gear or wheel, water speed sensor, wind speed sensor, wind velocity sensor (e.g., direction and magnitude), and/or other devices capable of measuring or determining a linear speed of the egos **140** (e.g., in a surrounding medium and/or aligned with a longitudinal axis of the egos **140)** and providing such measurements as sensor signals that may be communicated to various devices.

A gyroscope/accelerometer **170f** may be implemented as one or more electronic sextants, semiconductor devices, integrated chips, accelerometer sensors, or other systems or devices capable of measuring angular velocities/accelerations and/or linear accelerations (e.g., direction and magnitude) of the egos **140,** and providing such measurements as sensor signals that may be communicated to other devices, such as the analytics server **110a.** The gyroscope/accelerometer **170f** may be positioned and/or adapted to make such measurements in relation to a particular coordinate frame of the egos **140.** In various embodiments, the gyroscope/accelerometer **170f** may be implemented in a common housing and/or module with other elements depicted in **FIG. 1B** to ensure a common reference frame or a known transformation between reference frames.

A global navigation satellite system (GNSS) **170h** may be implemented as a global positioning satellite receiver and/or another device capable of determining absolute and/or relative positions of the egos **140** based on wireless signals received from space-born and/or terrestrial sources, for example, and capable of providing such measurements as sensor signals that may be communicated to various devices. In some embodiments, the GNSS **170h** may be adapted to determine the velocity, speed, and/or yaw rate of the egos **140** (e.g., using a time series of position measurements), such as an absolute velocity and/or a yaw component of an angular velocity of the egos **140.**

A temperature sensor **170i** may be implemented as a thermistor, electrical sensor, electrical thermometer, and/or other devices capable of measuring temperatures associated with the egos **140** and providing such measurements as sensor signals. The temperature sensor **170i** may be configured to measure an environmental temperature associated with the egos **140,** such as a cockpit or dash temperature, for example, which may be used to estimate a temperature of one or more elements of the egos **140.**

A humidity sensor **170j** may be implemented as a relative humidity sensor, electrical sensor, electrical relative humidity sensor, and/or another device capable of measuring a relative humidity associated with the egos **140** and providing such measurements as sensor signals.

A steering sensor **170g** may be adapted to physically adjust a heading of the egos **140** according to one or more control signals and/or user inputs provided by a logic device, such as controller **170c.** Steering sensor **170g** may include one or more actuators and control surfaces (e.g., a rudder or other type of steering or trim mechanism) of the egos **140** and may be adapted to physically adjust the control surfaces to a variety of positive and/or negative steering angles/positions. The steering sensor **170g** may also be adapted to sense a current steering angle/position of such steering mechanism and provide such measurements.

A propulsion system **170k** may be implemented as a propeller, turbine, or other thrust-based propulsion system, a mechanical wheeled and/or tracked propulsion system, a wind/sail-based propulsion system, and/or other types of propulsion systems that can be used to provide motive force to the egos **140.** The propulsion system **170k** may also monitor the direction of the motive force and/or thrust of the egos **140** relative to a coordinate frame of reference of the egos **140.** In some embodiments, the propulsion system **170k** may be coupled to and/or integrated with the steering sensor **170g.**

An occupant restraint sensor **1701** may monitor seatbelt detection and locking/unlocking assemblies, as well as other passenger restraint subsystems. The occupant restraint sensor **1701** may include various environmental and/or status sensors, actuators, and/or other devices facilitating the operation of safety mechanisms associated with the operation of the egos **140.** For example, occupant restraint sensor **170l** may be configured to receive motion and/or status data from other sensors depicted in **FIG. 1B****.** The occupant restraint sensor **1701** may determine whether safety measurements (e.g., seatbelts) are being used.

Cameras **170m** may refer to one or more cameras integrated within the egos **140** and may include multiple cameras integrated (or retrofitted) into the ego **140,** as depicted in **FIG. 1C****.** The cameras **170m** may be interior- or exterior-facing cameras of the egos **140.** For instance, as depicted in **FIG. 1C****,** the egos **140** may include one or more interior-facing cameras **170m-1.** These cameras may monitor and collect footage of the occupants of the egos **140.** The egos **140** may also include a forward-looking side camera **170m-2,** a camera **170m-3** (e.g., integrated within the door frame), and a rearward-looking side camera **170m-4.**

In some embodiments, the methods and systems discussed herein can operate exclusively with 2D sensors (e.g., 2D cameras) that may explicitly exclude depth cameras, time-of-flight (ToF) sensors, and other specialized depth-sensing technologies. The AI model and processing pipelines discussed herein can be trained to extract spatial and environmental information solely from monocular or stereo 2D image inputs without relying on depth estimation hardware. This ensures compatibility with 2D camera systems that only transmit captured images without any additional depth data, while maintaining robust performance in autonomous navigation and visual data analysis.

Referring to **FIG. 1B****,** a radar **170n** and ultrasound sensors **170p** may be configured to monitor the distance of the egos **140** to other objects, such as other vehicles or immobile objects (e.g., trees or garage doors). The radar **170n** and the ultrasound sensors **170p** may be integrated into the egos **140** as depicted in **FIG. 1C****.** The egos **140** may also include an autonomous driving or steering system **170o** configured to use data collected via various sensors (e.g., radar **170n,** speed sensor **170d,** and/or ultrasound sensors **170p)** to autonomously navigate the ego **140.**

Therefore, autonomous driving or steering system **170o** may analyze various data collected by one or more sensors described herein to identify driving data. For instance, autonomous driving or steering system **170o** may calculate a risk of forward collision based on the speed of the ego **140** and its distance to another vehicle on the road. The autonomous driving or steering system **1700** may also determine whether the driver is touching the steering wheel. The autonomous driving or steering system **170o** may transmit the analyzed data to various features discussed herein, such as the analytics server.

An airbag activation sensor **170q** may anticipate or detect a collision and cause the activation or deployment of one or more airbags. The airbag activation sensor **170q** may transmit data regarding the deployment of an airbag, including data associated with the event causing the deployment.

Referring back to **FIG. 1A****,** the administrator computing device **120** may represent a computing device operated by a system administrator. The administrator computing device **120** may be configured to display data retrieved or generated by the analytics server **110a** (e.g., various analytic metrics and risk scores), wherein the system administrator can monitor various models utilized by the analytics server **110a,** review feedback, and/or facilitate the training of the AI model(s) **110c** maintained by the analytics server **110a.**

The ego(s) **140** may be any device configured to navigate various routes, such as the vehicle **140a** or the robot **140b.** As discussed with respect to **FIGS. 1B-C,** the ego **140** may include various telemetry sensors. The egos **140** may also include ego computing devices **141.** Specifically, each ego may have its own ego computing device **141.** For instance, the truck **140c** may have the ego computing device **141c.** For brevity, the ego computing devices are collectively referred to as the ego computing device(s) **141.** The ego computing devices **141** may control the presentation of content on an infotainment system of the egos **140,** process commands associated with the infotainment system, aggregate sensor data, manage communication of data to an electronic data source, receive updates, and/or transmit messages. In one configuration, the ego computing device **141** communicates with an electronic control unit. In another configuration, the ego computing device **141** is an electronic control unit. The ego computing devices **141** may comprise a processor and a non-transitory machine-readable storage medium capable of performing the various tasks and processes described herein. For example, the AI model(s) **110c** described herein may be stored and performed (or directly accessed) by the ego computing devices **141.** Non-limiting examples of the ego computing devices **141** may include a vehicle multimedia and/or display system.

In operation, the one or more egos **140** may collect image data from their cameras and transmit the image data to the processor (placed locally on the one or more egos **140)** and/or the analytics server **110a,** as depicted in the data stream **172.** The processor may then execute the AI model(s) **110c** to predict navigational decisions for the one or more egos **140.**

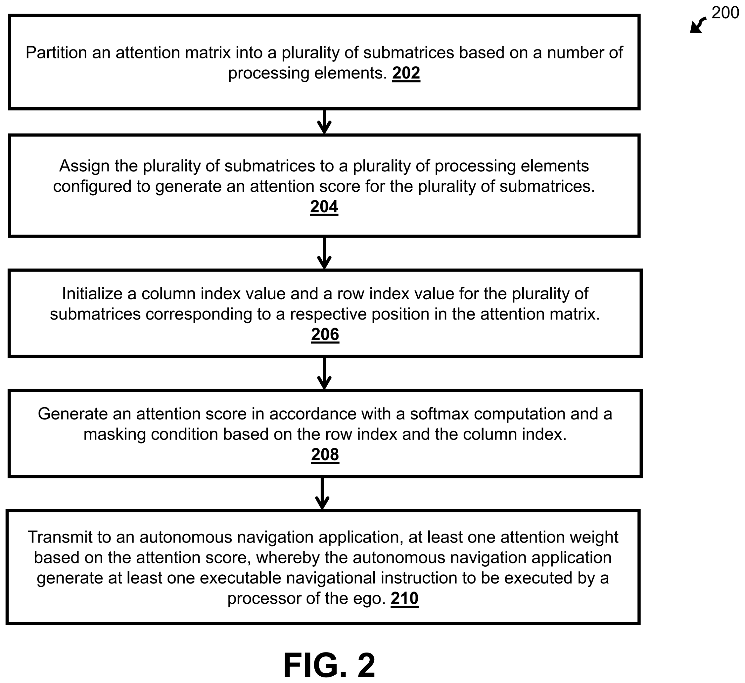

**FIG. 2** illustrates a flow diagram of a method **200** executed in a customized mask generation system, according to embodiments. The method **200** may include steps **202-210.** However, other embodiments may include additional or alternative steps or may omit one or more steps altogether. The method **200** is described as being executed by an analytics server (e.g., a computer similar to the analytics server **110a).** However, one or more steps of the method **200** may be executed by any number of computing devices operating in the distributed computing system described in **FIGS. 1A** and **1B** (e.g., a processor of the egos **140** and/or egos computing device **141).** For instance, one or more computing devices may locally perform some or all of the steps described in **FIG. 2****.**

At step **202,** the analytics server may partition a matrix into a plurality of submatrices based on a number of processing elements. In some embodiments, the analytics server may partition a matrix of shape (l, l), where l represents the length of an input sequence, into one or more submatrices of shape (l, n). As used herein, n may correspond to a number of processing elements available for parallel computation. The analytics server may perform this partitioning to align portions of the matrix with respective processing elements, such that each processing element may independently compute scores (e.g., attention scores) for a designated column or group of columns.

In some embodiments, if the sequence length l exceeds the number of processing elements n, the analytics server may implement a tiling strategy in which the (l, 1) matrix is divided into successive (l, n) submatrices, each processed in multiple iterations to ensure complete coverage of the space (e.g., attention space). This column-wise partitioning may be beneficial for architectures where the softmax computation operates along each column and where minimizing memory bandwidth and synchronization overhead is desirable.

At step **204,** the analytics server may assign the plurality of submatrices to a plurality of processing elements configured to generate a score for the plurality of submatrices. In some embodiments, the analytics server may assign each of the n processing elements to a processing element that is configured to compute scores for a respective column of a submatrix derived from the matrix. Following the partitioning of the full matrix into one or more submatrices of shape (l, n), the analytics server may associate each processing element with a corresponding column index within the submatrix such that the processing element is responsible for computing scores along that column across all rows.

At step **206,** the analytics server may initialize a column index value and a row index value for the plurality of submatrices corresponding to a respective position in the matrix. In some embodiments, the analytics server may initialize, for each processing element, a column index value and a row index value that correspond to a specific position within the matrix. The column index may identify the particular column of the matrix assigned to a given processing element, while the row index may track the current row being evaluated as part of the score computation.

In some embodiments, the analytics server may preload these index values into registers or memory locations accessible to the processing elements, allowing for efficient iteration over matrix entries during execution. For instance, in a tile of shape (l, n), each processing element may retain a fixed column index corresponding to its assigned column, while the row index may be incremented over time as the matrix is traversed row-by-row.

At step **208,** the analytics server may generate a score in accordance with a softmax computation and a masking condition based on the row index and the column index. In some embodiments, the analytics server may configure each processing element to evaluate a masking condition based on a row index and a column index associated with a respective position in the matrix. The masking condition may comprise a comparison operation that determines whether a given input element-corresponding to a particular row-column pair-should be included in or excluded from the computation performed by the model, such as the attention computation.

The comparison may take the form of a simple relational expression, such as whether the current row index exceeds the column index, thereby enabling causal masking in autoregressive models. Alternatively, the masking condition may include more complex logic, such as a modular arithmetic function or offset-based threshold evaluation, in which the row and column indices are manipulated to simulate dynamic or discontinuous mask boundaries. For example, the processing element may compute a function such as mod (row _idx-S, M) and compare the result to a predefined masking threshold L, effectively using integer overflow behavior to control masking at low computational cost.

At step **210,** the analytics server may transmit to an autonomous navigation application, at least one weight (e.g., attention weight) based on the score, whereby the autonomous navigation application generates at least one executable navigational instruction to be executed by a processor of the ego. In some embodiments, upon determining that the masking condition is satisfied, the analytics server may configure each processing element to modify the corresponding score by assigning a predefined masking value. This predefined value may be a large negative constant, such as negative infinity (-∞), which ensures that the masked score becomes negligible or zero after application of the softmax function. This assignment may be performed in-line with the computation (e.g., attention computation), allowing the masking operation to be fused directly into the data flow without requiring separate memory access for mask application. Moreover, each processing element may compute a softmax function over its respective set of scores. The inclusion of masked scores-set to the predefined masking value-may ensure that those entries contribute a zero value in the softmax output, effectively excluding them from further influence in the attention mechanism.

Once the softmax computation is completed, the analytics server may configure the processing elements to output a corresponding set of weights, such as attention weights. These weights may be used to compute weighted sums over value vectors in a transformer architecture or to inform downstream neural network layers. The analytics server may then transmit, to an autonomous navigation application, one or more weights generated from the softmax computation over a set of scores. These weights may reflect the relative importance of various input tokens, sensor signals (e.g., GPS), image features, and/or spatial locations within a transformer-based mechanism, such as the attention mechanism.

The autonomous navigation application may consume the transmitted weights as part of a downstream decision-making pipeline, which may include waypoint prediction, trajectory planning, obstacle avoidance, or scene understanding. In some embodiments, the weights may correspond to feature activations derived from multi-camera perception, location inputs (e.g., GPS or other localization paradigms), or map-based priors, and may be used to influence how the navigation system interprets and prioritizes its environment in real-time.

In a non-limiting example implementation of the masking framework, the analytics server coordinates the partitioning of the matrix, the initialization of index registers, and the execution of masking logic directly within the processing elements. The analytics server may use the method **200** to generate a mask for a (l, l) matrix of data. In this example, l denotes the sequence length and n the number of available processing elements (they could be part of SIMD, SIMT or asynchronous multi core CPUs). Given a mask of shape (l, l), the matrix may be partitioned into tiles of shape l x n, such that each processing element is responsible for computing one column (or row) of the matrix per tile. This is consistent with the structure of the softmax operation, which performs a reduction over each column.

Therefore, each processing element can maintain two index registers:
col_idx: the column index assigned to that processing element, corresponding to the target token.
row_idx: the index of the input row currently being processed, incremented as the processing element iterates over the sequence.

The masking decision may then be executed as a conditional operation within the processing element using the following code:

```
         if (row_idx > col_idx) {
         score = -∞; // or equivalent representation of an ignored softmax input
         }
```

This comparison instruction may replace the need to consult a precomputed mask matrix. The paradigm discussed herein may naturally implement causal masking (used in autoregressive models), where the model can attend to a particular token and earlier tokens. However, the paradigm discussed herein may also support arbitrary masking patterns by modifying the initial values of row_idx and col_idx at runtime. For instance, the masking paradigm discussed herein can be generalized to batch masks, segment masks, and/or application-specific masks (e.g., for self-navigating perception models) by adjusting the arithmetic initialization of the row and column indices. Moreover, in one embodiment, the methods and systems discussed herein exploit integer overflow and underflow behavior inherent in two's-complement arithmetic to emulate nontrivial masking patterns using the same simple comparison predicate.

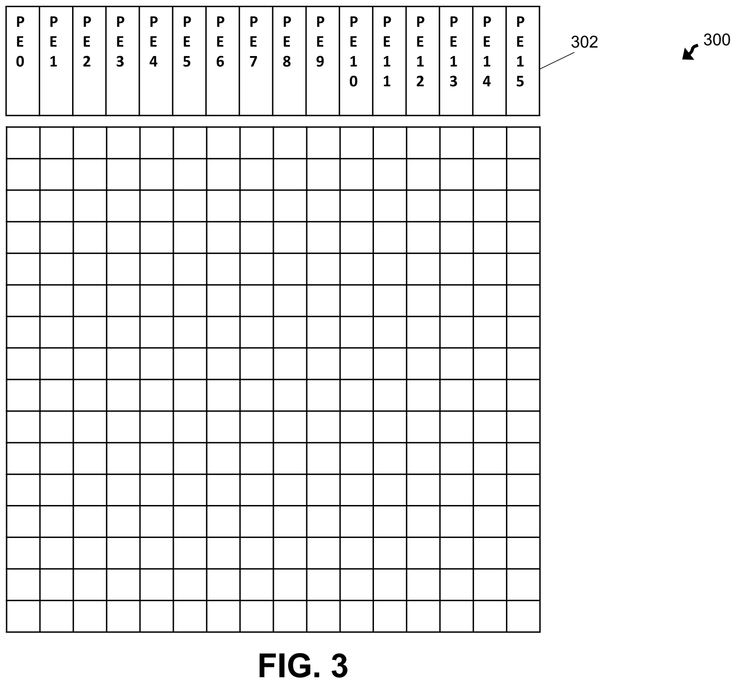

**FIG.** 3 illustrates a visual representation of an example 300 of a causal mask applied across a set of parallel processing elements labeled processing element 0 through processing element 14 (row 302). Each processing element may be responsible for computing scores for a corresponding column in the matrix. The matrix itself is visualized as a 15×15 grid, where each cell represents a position in the score matrix between two tokens or data elements.

As depicted, cells are either unfilled (white) or filled with cross-hatching. In the example 300, the unfilled cells represent positions in the matrix that are included in the softmax computation, meaning the model may be permitted to attend to those positions. In contrast, the filled cells denote positions that are masked (e.g., they are excluded from influencing the output (e.g., attention output). This masking technique may be used to ensure that the model can attend to a particular token and to tokens occurring earlier in the sequence, thereby enforcing causal dependencies during inference or autoregressive generation.

To create the depicted mask in the softmax, processing elements (or at least a portion of the processing elements) may be programmed to execute the following code:

```
         if (row_idx > col_idx) {
         Set input to -inf
         //Rest of softmax code
```

In some embodiments, row_idx may be incremented by 1 after every input element and the col_idx is set to the index of the processing element in the array processor. As opposed to generating an l x l matrix that represents the mask, the analytics server may add this code to each processing element. In some embodiments, each processing element may use a thread id to identify the column associated with the mask and use the thread id to identify what data to be preloaded. Adding this code may add one additional instruction to the softmax operation. However, this one additional instruction may ultimately have a much smaller impact (on the required computing resources) than conventional methods of loading and storing an entire l x l mask, which ultimately would result in undesirable data movement and bandwidth usage.

In some embodiments, the methods and systems discussed herein may use customized masks (e.g., masks that include multiple patters for different columns and rows). Customized masks may be especially useful for autonomous navigational purposes. Specifically, customized masks may be needed to support application-specific constraints, particularly in domains like self-navigating decision-making where standard masks (e.g., causal or padding masks) are insufficient. One non-limiting example may involve constraints, where license plates must be masked or obfuscated before data can be transmitted to servers located in other jurisdictions. In those embodiments, the analytics server must generate a custom mask to exclude or blur license plate regions in image data prior to processing or storage. This masking is not a traditional sequence-based or token-based mask but rather a spatial or region-specific mask tailored to a legal or operational requirement.

In another non-limiting example, the systems and methods described herein may be applied to enforce access control policies in multi-tenant or federated learning environments. For instance, when multiple agents or users share a common model or data pipeline, the disclosed masking logic may be used to restrict visibility of certain data elements based on user roles, geographic boundaries, or contractual agreements. By initializing row and column indices to reflect access permissions or data ownership, the system can enforce fine-grained masking policies at runtime without requiring centralized coordination or static configuration files. This enables secure, scalable deployment of machine learning models in environments where data confidentiality and selective visibility are critical.

Another non-limiting example may include sensor data, such as GPS data. Customized masking patterns may be needed for self-driving applications involving GPS data. For example, autonomous systems may require attention to be restricted to nearby or forward-facing objects based on the vehicle's current location and heading. This may necessitate dynamic, spatially aware masks that adapt in real-time as the vehicle moves. Traditional approaches that materialize full (l, l) masks may be computationally prohibitive in such scenarios.

In yet another non-limiting example, many autonomous driving architectures may be equipped with multiple cameras positioned at various angles (e.g., front, rear, side, wide-angle) each capturing different portions of the environment. In such systems, attention mechanisms processing visual input from these cameras may need to attend selectively to information from certain camera views, depending on the task, context, or relevance of the scene. For instance, a model may mask out rear-facing camera input when predicting forward trajectories, prioritize side-camera input when detecting lane changes or nearby vehicles, and/or apply different scopes to each camera stream based on range, occlusion, or redundancy. Since these masking needs can vary across time, camera configurations, or driving scenarios, a fixed or materialized mask may be inflexible and inefficient.

By implementing the methods and systems discussed herein, rather than materializing a full (l, l) mask tensor in memory, the analytics server may operate directly within a multi-threaded architecture-such as a GPU or a custom ASIC-by leveraging local logic within each processing element. Specifically, each processing element may be configured to preload a set of offset values that determines the applicable masking pattern. During execution, instead of accessing a separate mask and performing an explicit addition or masking step, each processing element may perform a single comparison operation to determine whether a given score should be included or rejected. This comparison can be fused into the softmax operation, eliminating the need to allocate, store, or access the full mask matrix. As a result, values are either used as-is or dynamically rejected during computation based on the outcome of the offset-based comparison, yielding a highly efficient and hardware-friendly approach to masking.

In some embodiments, the masking techniques described herein may be optimized for use cases in which each column of a matrix contains a single contiguous unmasked region. This constraint may enable the masking logic to be implemented using a lightweight comparison operation between row and column indices (e.g., if (row_idx > col_idx)), which may be fused directly into the softmax computation. Such a configuration may be particularly well-suited for causal and batched masking patterns, where each processing element evaluates a single condition to determine whether a score should be included or suppressed. This approach reduces memory overhead and avoids the need to materialize a full (l, l) mask matrix.

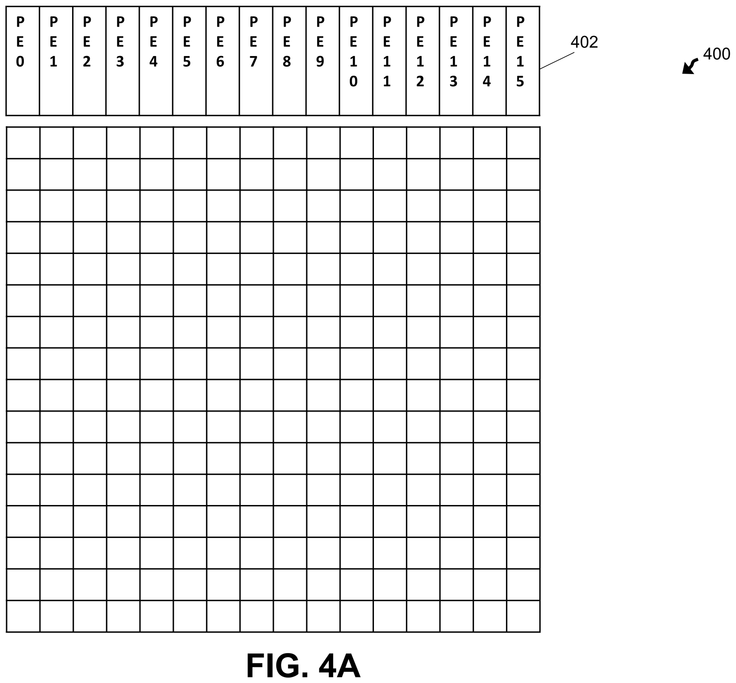

**FIGS. 4A-4C** illustrate an example of a batch masking technique implemented using index-based masking logic across a set of processing elements. In this example, the analytics server may configure each processing element to evaluate a masking condition using register-initialized row and column index values, thereby eliminating the need to materialize an explicit mask of shape (1, 1).

As shown in FIG. 4A, each processing element (0-15) may be configured for computing scores for a respective column of a matrix tile. The filled regions represent masked positions, where the corresponding scores are suppressed, and the unshaded (white) regions represent unmasked positions, where scores are retained and included in subsequent softmax computations. As depicted, the analytics server may generate 16 submatrices (columns) and assign each submatrix to a group of processing elements (row **402).** Each processing element depicted is configured to analyze the corresponding column.

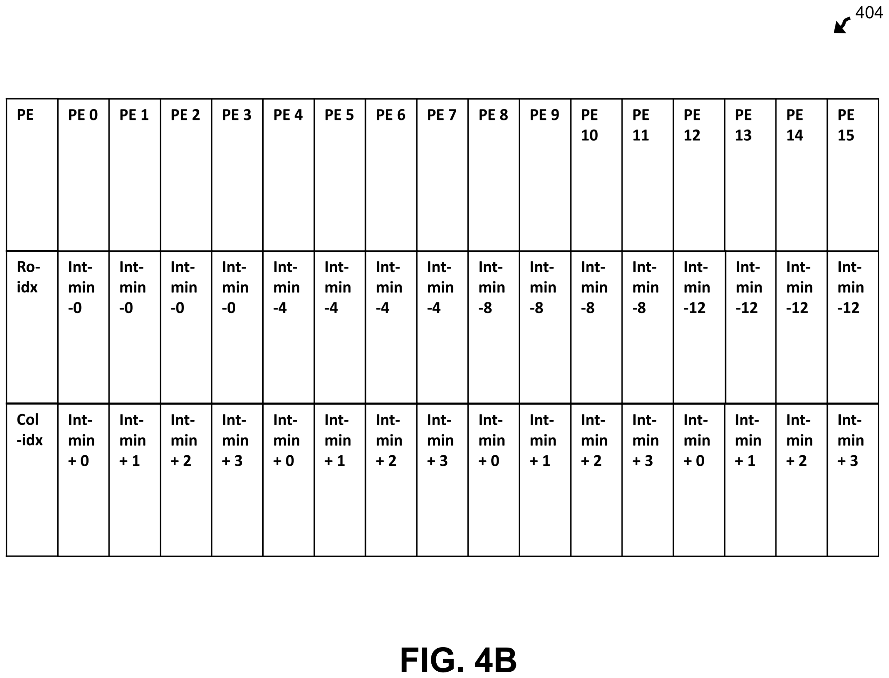

**FIG. 4B** depicts the initial values assigned to the index registers for each processing element. The row_idx values are initialized in grouped offsets, with processing elements 0-3 initialized to Int_min - 0, processing elements 4-7 to Int_min - 4, processing elements 8-11 to Int_min - 8, and processing elements 12-15 to Int_min - 12. The col_idx values are assigned in a repeating pattern of Int_min + 0 through Int_min + 3, cycling across the processing elements. These values encode both the starting position of the mask window and the extent of the unmasked region in each column.

At runtime, each processing element evaluates the following masking condition:

```
         if (row_idx > col idx) {
         score = -∞; // Marks the input as masked
         }
  // Continue with softmax computation
```

This comparison determines whether a given score should be suppressed (masked) or retained. The result is that each processing element only computes valid scores for the designated unshaded portion of its assigned column, without needing to reference a separate mask tensor.

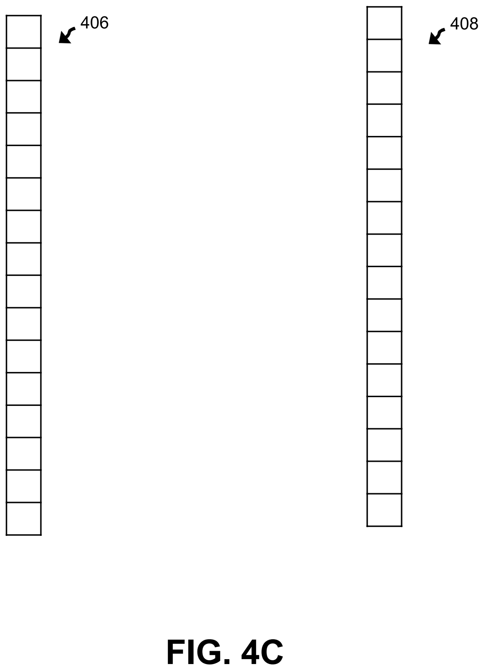

**FIG. 4C** illustrates column slices or submatrices **(406** and **408)** that result from the masking paradigm discussed herein. Each submatrix contains a contiguous unmasked segment (white) and a masked segment (shaded), reflecting the index-based masking window defined in FIG. 4A. Because the masking logic ensures a single contiguous unmasked region per column, the technique is amenable to hardware execution and avoids conditional branching.

The described technique supports any mask in which each column contains a single contiguous unmasked segment. By setting: $row_idx = Int_min - offset$ $col _ idx = Int _ min + length - 1$

The analytics server may precompute masking boundaries in hardware-friendly form, enabling efficient masking in transformer-based models deployed in latency-critical environments such as autonomous navigation, multi-agent planning, or batched language generation.

In some embodiments, each processing element may use an integer overflow paradigm when analyzing the data and creating the masking decision (e.g., which data should be eliminated or masked and which data should be included). In some embodiments, complex masking behavior may be emulated by modifying the initial values of the row index and column index associated with each processing element. By leveraging integer overflow behavior inherent in fixed-width hardware arithmetic, the analytics server may be able to implement sophisticated masking patterns using a single comparison operation, thereby achieving masking functionality with reduced computational overhead.

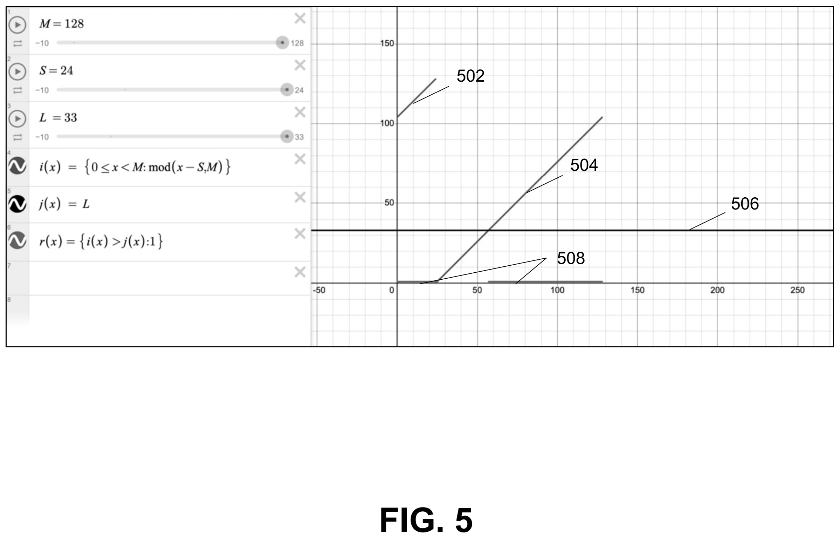

**FIG.** 5 illustrates a visualization of a masking function based on integer overflow behavior for use in efficient, index-based masking operations discussed herein. In the depicted embodiment, a modular arithmetic function is applied to generate cyclic values that enable discontinuous masking boundaries using simple comparison logic.

A first plotted line **502** may represent a modular arithmetic function i(x)=mod(x-S, M), where M is a fixed modulus (e.g., 128) and S is an offset value (e.g., 24). This function exhibits wrapped behavior as x increases, simulating integer overflow typical of fixed-width integer arithmetic in hardware systems. The resulting curve introduces a periodic pattern of values that can be selectively compared to threshold values to implement masking logic.

A line **504** may correspond to a fixed threshold value j(x)=L, where L (e.g., 33) defines the upper boundary of accepted values. By comparing the output of the modular function i(x) against this constant threshold, the analytics server may determine whether each element should be included or masked.

A line **506** may represent the baseline or x-axis reference for input values over which the masking function is evaluated. A line **508** may represent the binary masking result function r(x)={i(x)>j(x):1}, which outputs a value of 1 when the modular output exceeds the threshold L, and 0 otherwise. This produces a step function that can be interpreted as a hardware-efficient mask with a discontinuity boundary, enabling rejection or inclusion of scores during Transformer execution. By exploiting modular arithmetic and index comparison, the analytics server may use the technique illustrated in **FIG. 5** to create a dynamic mask with constant-time complexity relative to the number of discontinuities, eliminating the need to materialize or store large (l, l) mask matrices.

The technique discussed in **FIG. 5** may be used by individual processing elements to determine which input elements to include or reject during the softmax computation. In some embodiments, instead of loading a precomputed mask from memory, each processing element may locally evaluate a modular arithmetic function (e.g., mod (x - S, M)) to simulate integer overflow behavior. As shown in **FIG. 5****,** this behavior may create a wrapped linear function with controllable discontinuities. By comparing the modular output i(x) against a predefined threshold L, the processing element can produce a binary masking decision r(x) that is equivalent to the effect of a traditional mask-but without the cost of allocating and moving large matrices.

In one non-limiting use case, the disclosed masking technique may be applied to trajectory generation in an autonomous navigation system (e.g., a vehicle or a robot navigating throughout a terrain). In such systems, input data from multiple sensors, such as cameras positioned around the ego, are processed to generate a set of predicted trajectories. These trajectories are typically produced in an autoregressive manner, where each waypoint prediction is conditioned on the previous ones-analogous to sequential text generation in language models. During inference, the system generates a batch of potential future trajectories rather than a single path, enabling downstream components, such as a trajectory ranker or validator, to assess the safety and quality of each candidate path.

To support this architecture, the attention mechanism within the model may apply customized causal masks that ensure each predicted waypoint attends only to prior waypoints in its respective sequence, while also isolating attention across different trajectories in the batch. The methods and systems discussed herein enable this through a per-processing-element masking technique, where row and column indices are initialized in a manner that enforces both causality and trajectory-specific separation-without requiring materialization of a full mask.

For instance, and referring back to **FIG. 3****,** different columns may analyze different data. For instance, columns associated with processing elements 0-3 may correspond to location data (e.g., GPS data). However, the rest of the columns may correspond to generating different trajectories. For instance, columns associated with processing elements 4-7 may correspond to a first trajectory, columns associated with processing elements 8-11 may correspond to a second trajectory, and columns associated with processing elements 12-15 may correspond to a third trajectory. Using the entirety of the data, the same GPS data (processing elements 0-3) may be used to create three separate trajectories in parallel in a manner that is more computationally efficient than conventional methods.

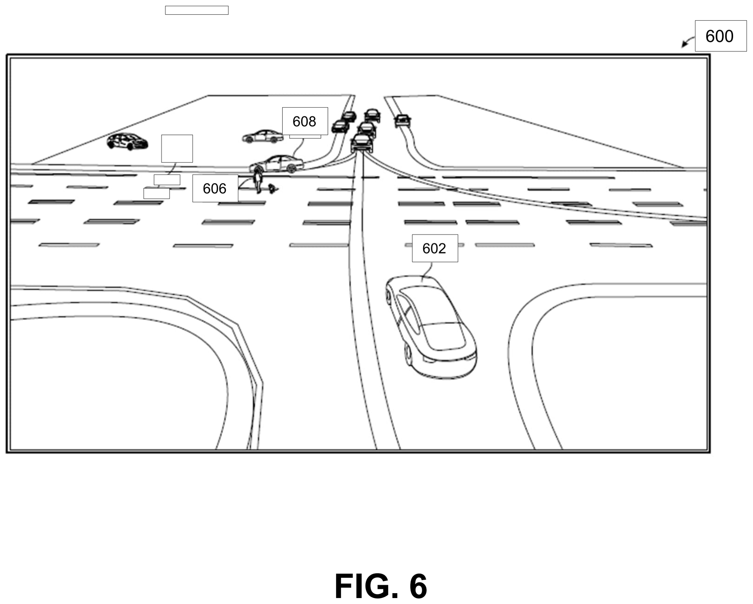

In real-world autonomous navigation scenarios, such as the one illustrated in **FIG.** 6, the masking techniques discussed herein can be used to efficiently evaluate multiple candidate trajectories for an ego **602** in the presence of dynamic agents and obstacles. In the example **600,** a transformer-based planning model may use sensor inputs, such as 2D camera feeds, to generate several potential future paths for the ego **602.** Each trajectory is generated autoregressively, where future waypoints depend on prior ones, and is represented as a separate sequence within a batch. The analytics server may initialize row and column indices for each processing element such that each trajectory's attention pattern is causally masked and isolated from the others. This allows the model to simultaneously consider several maneuvers, such as waiting for a pedestrian **606** to cross before turning left or turning left in advance while maintaining a safe distance-all without duplicating shared inputs like static map data or GPS location.

By enabling efficient batched trajectory generation and enforcing inter-trajectory independence through index-based masking, the analytics server can support rapid evaluation by a downstream ranker or validator. For instance, the analytics server may generate one path that prioritizes safety by yielding to pedestrian **606,** and another path that proceeds before the pedestrian reaches the lane of travel, provided such a maneuver does not violate constraints imposed by oncoming traffic, such as car **608.** The ranker can then score each trajectory based on cost, risk, and compliance with traffic rules, allowing the ego **602** to make an informed and safe decision.

In some embodiments, integer overflow behavior may be leveraged to implement dynamic offset and length constraints, allowing each processing element to apply piecewise or discontinuous masks that align with autoregressive requirements and domain-specific constraints. This approach may be well-suited for real-time (or near-real-time) navigational systems, where computational efficiency and the ability to dynamically adapt masking logic are critical to operational performance and safety.

The methods and systems described herein are not exclusively applicable to attention masking in transformer architectures but can be generally utilized in any computational context requiring selective, condition-based filtering of data across matrix-like structures or high-dimensional tensors (e.g., matrix multiplication between vectors). These methods and systems enable masking behavior through index-based comparisons executed at the processing element level-without the need for materializing large control structures-and can therefore be applied to various encoding tasks (e.g., dynamic gating in neural network layers, selective pooling or aggregation operations, sparsity enforcement in structured matrices, or efficient filtering of graph edges in graph neural networks). For instance, the methods and systems may be employed to implement dynamic feature selection within a convolutional backbone by masking out irrelevant spatial regions based on geometric constraints. In another example, they may be used to enforce access control policies or visibility rules in multi-agent reinforcement learning environments by dynamically masking agent interactions. Consequently, the methods and systems discussed herein provide a versatile masking framework for efficient, condition-driven computation across a wide array of machine learning and signal processing domains.

In addition to transformer-based architectures, the systems and methods described herein may be applied to a wide range of machine learning and signal processing models that require selective, condition-based filtering of matrix-like data structures. For example, in graph neural networks (GNNs), adjacency matrices or edge weight matrices may be used to encode relationships between nodes. These matrices can be large and sparse, and masking may be frequently employed to enforce structural constraints or exclude irrelevant edges during message passing. The index-based masking techniques disclosed herein may be used to avoid materializing full adjacency or mask matrices by enabling per-node or per-edge index comparisons to determine connectivity or influence. This paradigm allows for efficient execution on hardware accelerators and supports dynamic graph structures where edge relationships may evolve over time.

Similarly, in convolutional neural networks (CNNs), particularly those used in spatially aware tasks such as object detection or segmentation, selective pooling or attention-like mechanisms are often employed to focus on relevant regions of an image. The masking techniques described herein may be used to implement dynamic feature selection within convolutional backbones by masking out irrelevant spatial regions based on geometric constraints or learned priors. For instance, in a multi-scale feature pyramid, processing elements may be initialized with spatial indices and apply masking logic to exclude features outside a region of interest, without requiring explicit mask tensors. This enables efficient, real-time processing in embedded or resource-constrained environments.

In addition to its application in attention-based decoding, the disclosed masking paradigm may also be employed during encoding in transformer architectures, particularly in scenarios where selective or structured attention is required across input sequences. For example, in multi-sensor fusion models used in autonomous navigation systems, the encoder may receive inputs from different modalities (e.g., cameras and GPSs) each requiring separate boundaries. The analytics server may initialize row and column indices per processing element such that analysis is permitted only within a given modality or within a time-aligned subset of inputs. This enables the encoder to respect sensor-specific dependencies and constraints while maintaining high-throughput computation across fused input streams. Because the masking discussed herein is performed without explicit matrix materialization, the methods and systems discussed herein support real-time (or near-real-time) encoding.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, attributes, or memory contents. Information, arguments, attributes, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-Ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method for autonomous navigation of an ego using a transformer model, the method comprising:
partitioning, by one or more processors, a matrix associated with the transformer model into a plurality of submatrices based on a number of processing elements;
assigning, by the one or more processors, the plurality of submatrices to a plurality of processing elements configured to generate a score for the plurality of submatrices;
initializing, by the one or more processors, a column index value and a row index value for the plurality of submatrices corresponding to a respective position in the matrix;
generating, by the one or more processors, a score in accordance with a softmax computation and a masking condition based on the row index value and the column index value; and
transmitting, by the one or more processors, to an autonomous navigation application, at least one weight based on the score, whereby the autonomous navigation application generate at least one executable navigational instruction to be executed by a processor of the ego.

2. The method of claim 1, wherein the masking condition comprises a comparison between the row index value and the column index value to determine whether to assign a predefined masking value to the score.

3. The method of claim 2, wherein the predefined masking value comprises a negative infinity value or a value that renders a corresponding score negligible in a softmax computation.

4. The method of one of the preceding claims, wherein at least one processing element evaluates the masking condition without accessing a precomputed mask matrix.

5. The method of one of the preceding claims, wherein the softmax computation is fused with the masking.

6. The method of one of the preceding claims, wherein transmitting the at least one weight comprises sending the at least one weight to an autonomous navigation application configured to generate a predicted trajectory based on camera or sensor input data.

7. The method of one of the preceding claims, wherein at least one processing element processes a column of at least one submatrix independently and in parallel with other processing elements.

8. A computer system for autonomous navigation of an ego using a transformer model, the computer system comprising a computer-readable medium having a set of non-transitory instructions that when executed by at least one processor, cause the at least one processor to perform the method of one of the preceding claims.

9. A computer system for autonomous navigation of an ego using a transformer model, the computer system comprising at least one processor configured to perform method of one of claims 1 to 7.
